# EUROPÄISCHE PATENTANMELDUNG

(11) **EP 1 710 114 A1**
(43) Veröffentlichungstag der Anmeldung: **11.10.2006**
(21) Anmeldenummer: 06006469.8
(22) Anmeldetag: 29.03.2006
(51) Int. Cl.: B60K 35/00

(54) **Landwirtschaftliche elektronische Überwachungs-, Steuerungs- und/oder Regeleinrichtung**

(30) Priorität: 09.04.2005 DE 102005016331; 27.04.2005 DE 102005019490
(71) Anmelder: Amazonen-Werke H. Dreyer GmbH & Co. KG, 49205 Hasbergen (DE)
(72) Erfinder: Marquering, Johannes, Dr., 49176 Borgloh (DE); Wiemeyer, Benno, 49504 Lotte (DE); Heitmeyer, Kilian, 49152 Bad Essen (DE)

(57) **Zusammenfassung**

Landwirtschaftliche elektronische Überwachungs-, Steuerungs- und/oder Regeleinrichtung mit Betätigungs- und/oder Eingabeeinrichtungen (7,8,9), die in einer ein Lenkrad (6) aufweisenden landwirtschaftlichen Maschine (1) angeordnet ist. Um die Bedienung der elektronischen Überwachungs-, Steuerungs- und/oder Regeleinrichtung zu verbessern, ist vorgesehen, dass zumindest einige der Betätigungs- und/oder Eingabeeinrichtungen (7,8,9) am und/oder im Bereich des Lenkrades (6) angeordnet sind.

## Beschreibung

Die Erfindung betrifft eine landwirtschaftliche elektronische Überwachungs-, Steuerungs- und/oder Regeleinrichtung gemäß des Oberbegriffes des Patentanspruches 1.

Derartige Einrichtungen sind beispielsweise durch die DE 195 39 225 A1 bekannt. Diese Einrichtung besteht aus einem im Sichtfeld des Fahrers angeordneten Bildschirm und einer seitlich in der Schlepperkabine getrennt von dem Bildschirm angeordneten Eingabeeinrichtung, die mit einem Kabel oder über eine drahtlose Datenübertragungseinrichtung mit dem Bildschirm verbunden ist. Die Eingabeeinrichtung ist in einem Abstand zum Lenkrad seitlich in der Schlepperkabine angeordnet und im dem Bereich angeordnet, in dem sich weitere Bedienelemente für die landwirtschaftliche Maschine, wie beispielsweise einem Schlepper oder einer selbstfahrenden landwirtschaftliche Arbeitsmaschine, befinden. Es müssen also quasi alle Bedienungen der elektronischen Überwachungs-, Steuerungs- und/oder Regeleinrichtung und der Bedienelemente der Maschine von einer Hand durchgeführt werden.

Der Erfindung liegt die Aufgabe zugrunde, die Bedienung der elektronischen Überwachungs-, Steuerungs- und/oder Regeleinrichtung zu verbessern.

Diese Aufgabe wird erfindungsgemäß dadurch gelöst, dass zumindest einige der Betätigungs- und/oder Eingabeeinrichtungen am oder im Bereich des Lenkrades angeordnet sind. Somit können diese am oder im Bereich des Lenkrades angeordneten Betätigungs- und/oder Eingabeeinrichtungen von der Hand, die sich am Lenkrad befindet, ohne das Lenkrad loszulassen, in bequemer und sicherer Weise betätigt werden.

In bevorzugter Weise sind zumindest die während des Arbeitseinsatzes und oder Wendevorganges der Maschine vom Fahrer der Maschine zu bedienenden Betätigungs- und/oder Eingabeeinrichtungen am oder im Bereich des Lenkrades angeordnet. Hierdurch ergibt sich ein hoher Bedienungskomfort, weil der Fahrer während des Wende- und Lenkvorganges mit der Hand, mit der er das Lenkrad betätigt bzw. dreht gleichzeitig die Tasten betätigen kann, die zur Einleitung von Funktionsabläufen der an Maschine angebauten Arbeitsmaschinen, wie Verteilmaschinen, Bodenbearbeitungsmaschinen, Mähmaschinen etc. während des Wendevorganges am Feldende erforderlich sind. Somit kann also in bequemer Weise die jeweils erforderliche Taste, die sich am oder im Bereich des Lenkrades befindet, von dem Fahrer der Maschine bedient werden. In einer Ausgestaltung ist vorgesehen, dass die Betätigungs- und/oder Eingabeeinrichtungen als Schalter ausgebildet sind. Diese Schalter können als Tasten, Kipptasten oder Kippschalter ausgebildet sein.

Auch ist möglich, dass der Schalter als Joystick ausgebildet ist und dass sich am Joystick weitere Betätigungs- und/oder Eingabeeinrichtungen oder Schalter, Tasten, etc. angeordnet sind.

In einer weiteren Ausgestaltung ist vorgesehen, dass an dem Lenkrad ein Lenkknauf angeordnet ist, dass an dem Lenkknauf die Betätigungs- und/oder Eingabeeinrichtungen angeordnet sind. Hierbei können, ohne den Lenkknauf loszulassen, die Betätigungseingabeeinrichtungen von dem Fahrer bedient werden.

Des Weiteren ist es auch möglich, dass an dem Lenkrad ein Lenkknauf angeordnet ist, dass der Lenkknauf als die Betätigungs- und/oder Eingabeeinrichtung ausgebildet ist. Hierbei kann der Lenkknauf auch als Joystick ausgebildet sein. Zusätzlich können noch weitere Betätigungs- und Eingabeeinrichtungen an dem Lenkknauf angeordnet sein.

In einer weiteren Ausgestaltung der Erfindung ist vorgesehen, dass die Betätigungs- und/oder Eingabeeinrichtungen frei programmierbar sind. Hierdurch ist es möglich, die jeweiligen Betätigungseinrichtungen mit den erforderlichen Funktionen zu belegen.

Eine besonders vorteilhafte Datenübertragung mit sehr geringen Installationsarbeiten, dies ist insbesondere bei einer Nachrüstung vorteilhaft, ist dadurch zu erreichen, dass die Betätigungs- und/oder Eingabeeinrichtungen über eine drahtlose Übertragungseinrichtung miteinander verbunden sind. Diese Überwachungseinrichtung kann als Funkverbindung, beispielsweise Bluetooth-Verbindung ausgebildet sein.

Die Übertragungseinrichtung mit der Überwachungs-, Steuerungs- und/oder Regeleinrichtung ist als Bordcomputer ausgebildet. Mit diesem Bordcomputer werden die verschiedenen Stellorgane der landwirtschaftlichen Maschine oder die an dieser landwirtschaftlichen Maschine angebauten Arbeitsgeräte, wie Verteilmaschinen, Bodenbearbeitungsmaschinen Heuwerbungsmaschinen etc. gesteuert, geregelt oder überwacht.

Vor allem am Feldende, insbesondere beim Wendevorgang müssen die landwirtschaftlichen Maschinen gesteuert viele Funktionsabläufe durchgeführt werden. Vielfach sind diese Maschinen mit einem sog. Vorgewendemanagement ausgerüstet, d.h. dass nur mittels eines Tastendruckes am Ende oder Anfang der Ausbringbahn, also vor oder nach dem Wendevorgang das Vorgewendemanagement, welches im Bordcomputer abgespeichert ist, ausgelöst und beendet werden muss. Unter Vorgewendemanagement versteht man, dass in dem Bordcomputer die einzelnen Funktionsabläufe abgespeichert sind und dass von dem Bordcomputer aus die einzelnen Stellvorgänge ausgelöst werden, indem der Bordcomputer an die jeweiligen Stellglieder die erforderlichen Signale aussendet. So werden beispielsweise Organe der Maschine ausgehoben, abgesenkt oder ein- oder ausgeschaltet etc.. Vielfach muss durch eine optische Kontrolle überprüft werden, ob der durch Tastendruck eingeleitete Befehl zum Einleiten des Vorgewendemanagements oder Beenden des Vorgewendemanagementes auch tatsächlich ausgeführt worden ist. Da der Fahrer beim Wendevorgang, d.h. beim Ein- oder Ausfahren aus dem Bestand sehr stark beschäftigt ist, ist diese optische Überwachung nur schwierig zu verwirklichen.

Um trotzdem in einfacher Weise kontrollieren zu können, ob der Befehl zum Einleiten oder Beenden des Vorgewendemanagements oder des wichtigsten Bedienungsvorganges am Feldende bzw. am Feldanfang auch tatsächlich ausgelöst ist und durchgeführt wird, ist erfindungsgemäß vorgesehen, dass zumindest eine der Betätigungs- und/oder Eingabeeinrichtungen als durch seine Schaltposition und/oder -stellung die Schaltstellung und/oder den Schaltimpuls anzeigendes Element, wie beispielsweise Schalter, Taster ausgebildet ist. Infolge dieser Maßnahmen kann der Schlepperfahrer anhand der verbleibenden Tasterstellung ohne optische Kontrolle durch einfaches Ertasten der Tasterstellung sicher feststellen, ob der gewünschte Befehl aktiviert oder zurückgenommen worden ist.

In einfacher Weise lässt sich ein derartiger Schalter dadurch verwirklichen, dass das die Schaltstellung und/oder den Schaltimplus anzeigende Element als Druckschalter ähnlich der Drucktaste eines Kugelschreibers ausgebildet ist.

Der Schlepperfahrer kann durch einfaches Ertasten und/oder Abtasten des Bedienungselementes die Position und die Schaltstellung dadurch erkennen, dass das die Schaltstellung und/oder den Schaltimplus anzeigende Element als seine Schaltstellung und/oder Schaltimpuls ertastbares Element ausgebildet ist.

In vorteilhafter Weise kann ein ertastbarer Schalter auf dem Lenkknauf auf dessen Oberseite angeordnet sein.

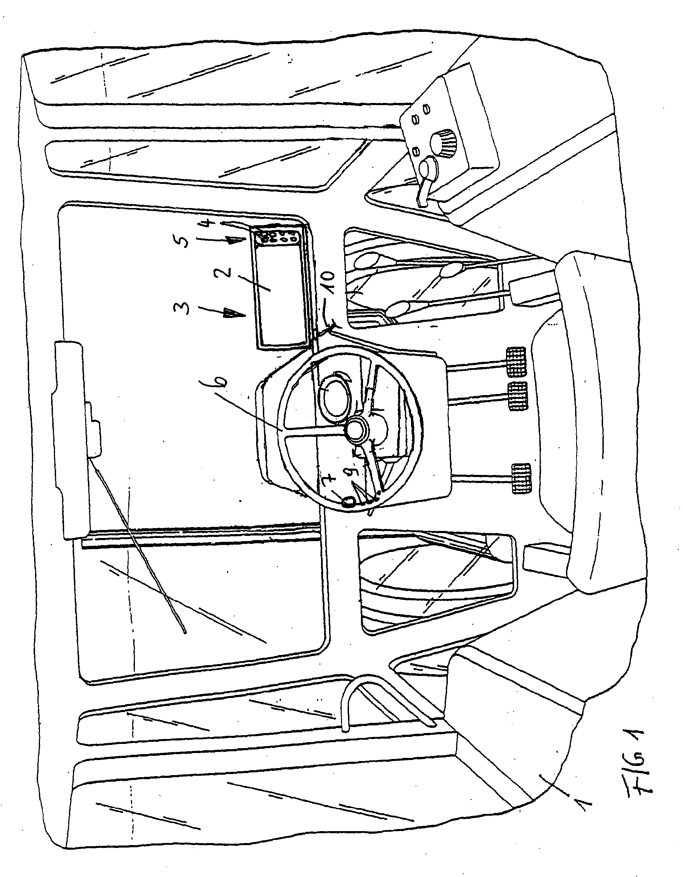

Weitere Einzelheiten der Erfindung sind der Beispielsbeschreibung und den Zeichnungen zu entnehmen. Hierbei zeigen
- Fig. 1: die Anordnung der elektronischen Einrichtung auf einer als Ackerschlepper ausgebildeten landwirtschaftlichen Maschine aus der Sicht des Schlepperfahrers in perspektivischer Darstellung,

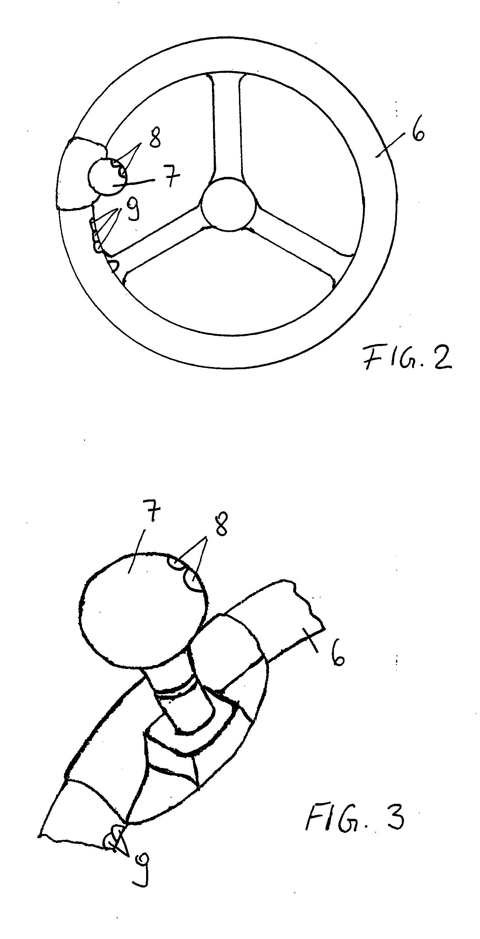

- Fig. 2: ein Lenkrad in Draufsicht mit Lenkknauf in vereinfachter Darstellung,
- Fig. 3: den an dem Lenkrad angeordneten Lenkknauf in perspektivischer und vergrößerter Darstellung,
- Fig. 4: einen weiteren an dem Lenkrad angeordneten Lenkknauf mit Druckknopf in perspektivischer und vergrößerter Darstellung und
- Fig. 5: den Lenkknauf mit sich in einer anderen Stellung befindlichen Druckknopf in der Darstellungsweise gemäß Fig. 4.

Auf der als Ackerschlepper 1 ausgebildeten landwirtschaftlichen Maschine ist im gut einsehbaren Bereich der Bildschirm 2 der als Bordcomputer 3 ausgebildeten landwirtschaftlichen elektronischen Überwachungs-, Steuerungs- und/oder Regeleinrichtung angeordnet. Der Bordcomputer 3 weist den Bildschirm 2 oder das Display und die seitlich angeordneten Tasten 4 als Eingabeeinrichtungen 5 auf.

An dem Lenkrad 6 der Maschine ist der Lenkknauf 7 angeordnet. An dem Lenkknauf 7 sind die beiden als Tasten 8 ausgebildeten Betätigungs- und Eingabeeinrichtungen für den Bordcomputer 3 angeordnet. Des Weiteren sind an dem Lenkrad 6 weitere Tasten 9 als Bestätigungs- und Eingabeeinrichtungen für den Bordcomputer 3 angeordnet.

Am Lenkrad 6 bzw. am Lenkknauf 7 sind die während des Arbeitseinsatzes und Wendevorganges der Maschine vom Fahrer der Maschine zu bedienenden Tasten 9 angeordnet. Die Tasten 8,9 sind über Datenübertragungseinrichtungen, beispielsweise Kabel oder eine drahtlose Datenübertragungseinrichtung, wie beispielsweise Bluetooth-Funkverbindung mit dem Bordcomputer 3 verbunden.

Über den Bordcomputer 3, der über das Kabel 10 mit dem an dem Schlepper angeordneten Maschinen verbunden ist, sind diese Maschinen entsprechend zu bedienen bzw. deren Bedienelemente zu betätigen. Auch können mittels der an dem Lenkrad 6 oder Lenkknauf 7 angeordneten Tasten 8,9 Elemente des Ackerschleppers oder des Selbstfahrers betätigt oder bedient werden.

Der Lenkknauf 7 kann auch als Joystick ausgebildet sein, so dass über den Lenkknauf 7 dann durch die Joystickfunktionen die Signale übertragen werden und die Stellorgane oder der Bordcomputer betätigt wird. Hierbei können dann auch am dem Lenkknauf 7, der eine Joystickfunktion, aufweist zusätzliche Tasten 8 angeordnet sein.

Des Weiteren können die Tasten 8,9 und die Joystickfunktionen frei programmierbar sein, so dass sie mit entsprechenden Funktionen belegt werden können.

Die als Tasten 8,9 ausgebildeten Betätigungs- und Eingabeeinrichtungen können auch als Schalter, Kipptasten oder Kippschalter ausgebildet sein. Es sind also jede Art von Betätigungseinrichtungen und Tastenschaltern möglich.

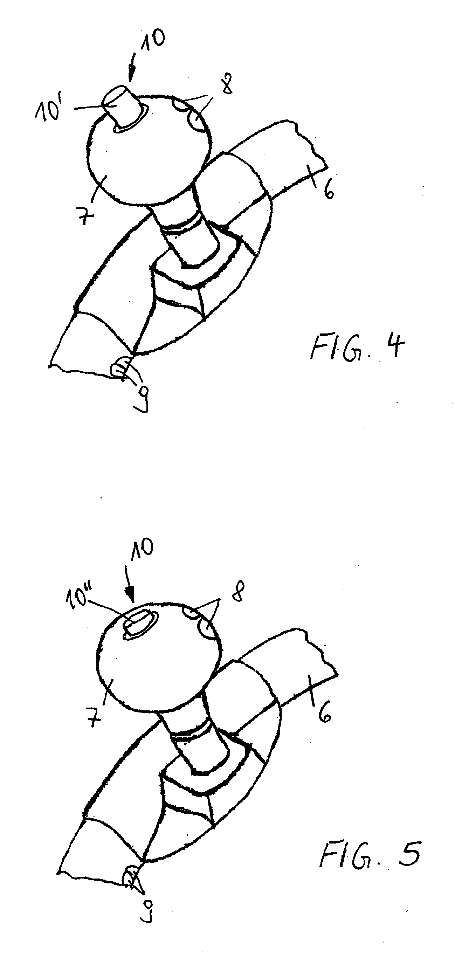

Auf der Oberseite des Lenkknaufes gemäß den Fig. 4 und 5 ist eine als Drucktaster 10 ausgebildeter Betätigungs- und Eingabeeinrichtung angeordnet. In der Fig. 4 befindet sich der Drucktaster 10 in seiner ausgefahrenen Stellung 10', während er sich in Fig. 5 in seiner eingedrückten Stellung 10'' befindet. Durch die jeweilige Schaltposition 10', 10" oder Schaltstellung des Druckknopfes 10 kann die Schaltstellung 10', 10'' oder der den Schaltimplus bestimmende Stellung 10', 10" des Tasters 10 von dem Schlepperfahrer mittels beispielsweise seines linken Daumens ertastet werden. Dieser Druckschalter 10 ist ähnlich der Drucktaste eines Kugelschreibers ausgebildet. Der Lenkknauf 7 und dessen dort angebrachte Schalter und Tasten 10, sind über eine drahtlose Übertragungseinrichtung, die beispielsweise als Funkverbindung, z. B. als Bluetooth-Verbindung ausgebildet ist mit dem Bordcomputer 3 verbunden. Durch Eindrücken der Drucktaste 10 in Stellung 10" lässt sich beispielsweise der Befehl zum Einleiten des Vorgewendemanagementes, d.h. dass die zum Wenden und Ausheben der Maschinen erforderlichen Befehle ausgelöst werden, um die einzelnen Stellvorrichtungen anzusteuern, auslösen. Nach Drücken des Drucktasters 10 bleibt dieser in eingedrückter Stellung 10'', wie die Fig. 5 zeigt, so kann der Fahrer mit seinem linken Daumen ertasten, ob der Druckknopf 10 eingedrückt ist oder sich in herausragender Stellung 10' gemäß Fig. 4 befindet. Dies bedeutet beispielsweise, wenn der Druckknopf 10 in Stellung 10'' eingedrückt ist, dass der Befehl zum Durchführen der für das Wenden am Feldende erforderlichen Stellglieder ausgelöst ist. Wenn der Wendevorgang durchgeführt ist, drückt der Fahrer wieder mit seinem linken Daumen auf den Druckknopf 10, so dass der entsprechende Befehl zum Beenden des Vorgewendemanagementes ausgelöst wird. Der Druckknopf 10 gelangt dann wieder in die in Fig. 4 dargestellte herausgehobene Position 10'. Auch dies kann der Fahrer mit seinem linken Daumen ertasten.

Somit kann also der Fahrer anhand der jeweiligen Tastenverstellung ohne optische Kontrolle, allein durch Ertasten der Stellung 10, 10" des Schalters 10 sicher feststellen, ob der Befehl aktiviert oder zurückgenommen ist.

Die den jeweiligen Schaltern und Tasten 8, 9, 10 zugeordneten Befehle können entsprechend in den Bordcomputer 3 eingespeichert werden und sind dann durch entsprechendes Drücken der Tasten 8, 9, 10 auszulösen.

## Patentansprüche

1. Landwirtschaftliche elektronische Überwachungs-, Steuerungs- und/oder Regeleinrichtung mit Betätigungs- und/oder Eingabeeinrichtungen, die in einer ein Lenkrad aufweisenden landwirtschaftlichen Maschine angeordnet ist, **dadurch gekennzeichnet, dass** zumindest einige der Betätigungs- und/oder Eingabeeinrichtungen (7,8,9) am und/oder im Bereich des Lenkrades (6) angeordnet sind.

2. Einrichtung nach Anspruch 1, **dadurch gekennzeichnet, dass** die während des Arbeitseinsatzes und/oder Wendevorganges der Maschine vom Fahrer der Maschine zu bedienenden Betätigungs- und/oder Eingabeeinrichtungen (7,8,9)am und/oder im Bereich des Lenkrades (6) angeordnet sind.

3. Einrichtung nach Anspruch 1, **dadurch gekennzeichnet, dass** die Betätigungs- und/oder Eingabeeinrichtungen (7,8,9) als Schalter ausgebildet sind.

4. Einrichtung nach Anspruch 1, **dadurch gekennzeichnet, dass** die Schalter als Tasten (8,9) ausgebildet sind.

5. Einrichtung nach Anspruch 1, **dadurch gekennzeichnet, dass** die Schalter als Kipptasten oder -schalter ausgebildet sind.

6. Einrichtung nach Anspruch 1, **dadurch gekennzeichnet, dass** der Schalter (7) als Joystick ausgebildet ist.

7. Einrichtung nach Anspruch 6, **dadurch gekennzeichnet, dass** am Joystick (7) weitere Betätigungs- und/oder Eingabeeinrichtungen (8) oder Schalter angeordnet sind.

8. Einrichtung nach Anspruch 1, **dadurch gekennzeichnet, dass** an dem Lenkrad (6) ein Lenkknauf (7) angeordnet ist, dass an dem Lenkknauf die Betätigungs- und/oder Eingabeeinrichtungen angeordnet sind.

9. Einrichtung nach Anspruch 1, **dadurch gekennzeichnet, dass** an dem Lenkrad (6) ein Lenkknauf (7) angeordnet ist, dass der Lenkknauf (7) als die Betätigungs- und/oder Eingabeeinrichtung ausgebildet ist.

10. Einrichtung nach Anspruch 9, **dadurch gekennzeichnet, dass** an dem Lenkknauf (7) weitere Betätigungs- und/oder Eingabeeinrichtungen (8) angeordnet sind.

11. Einrichtung nach Anspruch 9, **dadurch gekennzeichnet, dass** der Lenkknauf (7) als Joystick ausgebildet ist.

12. Einrichtung nach Anspruch 1, **dadurch gekennzeichnet, dass** die Betätigungs- und/oder Eingabeeinrichtungen (7,8,9) frei programmierbar sind.

13. Einrichtung nach Anspruch 1, **dadurch gekennzeichnet, dass** die Betätigungs- und/oder Eingabeeinrichtungen (7,8,9) über eine drahtlose Übertragungseinrichtung mit der Überwachungs-, Steuerungs- und/oder Regeleinrichtung verbunden sind.

14. Einrichtung nach Anspruch 1, **dadurch gekennzeichnet, dass** die Übertragungseinrichtung mit der Überwachungs-, Steuerungs- und/oder Regeleinrichtung als Bordcomputer (3) ausgebildet ist.

15. Einrichtung nach Anspruch 13, **dadurch gekennzeichnet, dass** die drahtlose Übertragungseinrichtung als Funkverbindung, beispielsweise Bluetooth-Verbindung ausgebildet ist.

16. Einrichtung nach Anspruch 1, **dadurch gekennzeichnet, dass** zumindest eine der Betätigungs- und/oder Eingabeeinrichtungen als durch seine Schaltposition (10',10'') und/oder -Stellung die Schaltstellung (10',10'') und/oder den Schaltimpuls anzeigendes Element (10), wie beispielsweise Schalter, Taster ausgebildet ist.

17. Einrichtung nach Anspruch 16, **dadurch gekennzeichnet, dass** das die Schaltstellung (10',10'') und/oder den Schaltimplus anzeigende Element als Druckschalter (10) ähnlich der Drucktaste eines Kugelschreibers ausgebildet ist.

18. Einrichtung nach Anspruch 16, **dadurch gekennzeichnet, dass** das die Schaltstellung (10',10'') und/oder den Schaltimplus anzeigende Element als seine Schaltstellung (10',10'') und/oder Schaltimpuls ertastbares Element (10) ausgebildet ist.
